# EUROPEAN PATENT APPLICATION

(11) **EP 4 817 862 A1**
(43) Date of publication of application: **07.10.2026**
(21) Application number: 26160859.0
(22) Date of filing: 26.02.2026
(51) Int. Cl.: B32B 5/02, B29C 65/08, B32B 3/28, B32B 7/14, B32B 27/12

(54) **ELASTIC LAMINATE**

(30) Priority: 31.03.2025 CN 202510396786
(71) Applicant: Nitto Denko Corporation, Ibaraki-shi, Osaka 567-8680 (JP)
(72) Inventor: Wang, Peipei, Taicang Jiangsu (CN); Choi, Hong Lim, Seoul (KR); Bao, Hui Lin, Taicang Jiangsu (CN); Liu, Yong Jun, Xingning City, Guangdong Province, (CN)
(74) Representative: Andrejewski - Honke Patent- und Rechtsanwälte Partnerschaft mbB

(57) **Abstract**

The invention relates to an elastic laminate having at least one top layer made of a nonwoven and an elastic film, the at least one top layer having, in an unstretched state in the cross direction, a plurality of folds running in the machine direction, and the at least one top layer and the elastic film being joined to one another at a plurality of spaced-apart bonding points. In an unstretched state along the cross-direction, at least two of the folds between the bonding points have a different cross-section.

## Description

The invention relates to an elastic laminate having atleastone top layer made of a nonwoven and an elastic film, wherein the at least one top layer in an unstretched state in the cross direction has a plurality of folds running in the machine direction. In this context, an unstretched state refers to a state in which the nonwoven is essentially free of force. On this basis, the at least one top layer and the elastic film are then joined to one another at a plurality of spaced-apart bonding points. Accordingly, there is no full-surface connection between the top layer and the elastic film. Rather, there may be a plurality of bonding points in both the machine direction and the cross direction, which fix the elastic film to the top layer.

Laminates of this kind are known in principle from the prior art, although the folding in the cross-direction makes it possible to achieve stretchability in the cross-direction despite the essentially non-elastic nonwoven top layers, with the elastic film providing the recovery behavior. In contrast, the elastic laminate exhibits no significant stretchability in the machine direction, since the folding is done exclusively in the cross-direction, so that at best onlya slightstretch is used in the machine direction due to the nonwoven used for the top layer. However, since the nonwoven is usually made of a non-stretchable material, the stretchability in the machine direction is significantly lower than in the cross-direction.

Various methods are known from practice to create elasticity in the cross direction in a laminate made of nonwoven and elastic film. For example, the so-called neckbonding is known, wherein different embodiments of this method are explained in the documents EP 0 707 106 B1, EP 1 458 565 B1 and US 7 008 496 B2.

In the case of neck-bonding, the nonwoven is guided at an increased draw-off speed after being unwound. This causes the nonwoven to be stretched in length and to constrict. This results in folds that are arranged next to each other in the cross-direction and aligned in the machine direction. The nonwoven must have a corresponding fiber structure so that the fibers align during necking and can be erected. The nonwoven folded in this way is then joined to an elastic film.

US 2006/003656 A1 teaches a design in which the entire laminate is additionally stretched by means of ring rolling after the nonwoven web has been laminated with the elastic film.

Although this techniques have proven successful in principle, it has also been shown that setting certain elasticity parameters is problematic, since the exclusive folding by constricting the nonwoven web means that the material is significantly less stressed at the edges than in the center of the nonwoven web, resulting in an uneven folding across the width of the nonwoven web.At the same time, the elasticity parameters can only be adjusted to a limited extent because the bonding points are independent of the nonwoven's folding. Accordingly, the elasticity parameters can vary to a certain extent across the width of the nonwoven web.

Another way to enable lateral elasticity is the so-called stretch bonding. In this process, the nonwoven web is essentially fed in untreated, while the elastic film is stretched in the cross direction by a desired amount. The nonwoven web is then joined to the elastic film in the stretched state of the elastic film, with the elastic laminate then raising folds as the elastic film returns to its original state. Accordingly, the foldes are not actively introduced into the nonwoven web, but are formed exclusively by the cross-elasticity of the elastic film. The formation of the bonding points then preferably occurs in the stretched state of the elastic film in order to achieve a uniform bonding pattern in the stretched state.

Such a design has the advantage that the elasticity and also the folding in the unstretched state is much more defined than in the previously described neckbonding. However, in such a design, the elasticity parameters are almost exclusively influenced by the pattern of the bonding points.

Therefore, there is an increasing demand for elastic laminates that are characterized by greater variability in the elasticity parameters compared to the previously known laminates.

Against this background, the invention is based on the task of specifying an elastic laminate that is characterized by a high degree of cross elasticity and, at the same time, a good feel.

The object and solution of this task is an elastic laminate according to patent claim 1. Accordingly, it is essential to the invention that in an unstretched state along the cross-direction, at least two of the folds between the bonding points have a different cross-section.

Compared to the laminates known to date, the laminate according to the invention is characterized by an irregular structure, which becomes visible in that folds between the bonding points arranged to each other in cross-direction differ from each other in their cross-section. These differences are particularly evident in the shape and/or size of the folds. Although it is sufficient for the purposes of the invention if only two folds have a different cross-section, it is preferred that a plurality of folds, in particular more than three, preferably more than five, folds have a different cross-section. In addition, the different folds are preferably at least partially arranged directly next to one another.

According to a preferred embodiment the cross-sectional area of the at least two folds differs from each other by at least 25%, particularly preferred by at least 35 %. The area is defines by the width, heightand cross-sectional shape of the folds.

According to a further preferred embodiment at least two folds have a different height, which preferably differs from one another by at least 25%, preferred by at least 35 %.

According to another embodiment, which also has its own inventive idea, in a stretched state in which the at least one top layer is essentially free of folds in the direction of stretching, the surface weight of the laminate and/or at least of the top layer at the bonding points is greater than the surface weight between the bonding points. In this context, reference is essentially made to an expansion direction in the cross-direction, with the surface weights providing information about how much material, in particular material of the at least one top layer, is provided at the bonding points. This stretched state is achieved when the laminate is stretched to the so-called "bulge effect". If this point is exceeded, the material of the top layer is stretched and destroyed. Accordingly, the bulge effect is characterized by a steep increase in force.

In this context, it should be noted that although the bonding points are introduced into the laminate at discrete points, areas with higher and lower surface weight are formed due to the alignment of the folds along the machine direction, and these areas also run along the machine direction. The areas with higher surface weight form where a bonding point is provided at a point in the laminate in the cross-direction, and the areas with low surface weight are completely free of bonding points. To determine the differences in surface weight, strips of identical length in the machine direction (e.g. 1m) can therefore be cut out of both areas and the surface weights can be determined by taking into account the stretch up to the wall effect.

It becomes clear that the bonding points define areas with an increased surface weight, with the surface weight being greater at all bonding points than in areas between the bonding points according to a preferred embodiment. Accordingly, the design of the bonding points can be used to adjust the elasticity of the elastic laminate in a targeted manner,whereas in a laminate produced by neck-bonding, the surface weight is essentially arbitrarily set at or between the bonding points due to the overstretching of the nonwoven.

In order to produce such an elastic laminate, the method for producing such an elastic laminate can comprise the following steps:
a) feeding at least one nonwoven web and one elastic film web in the machine direction,
b) forming folds at least by prefolding the at least one nonwoven web in the cross direction

Preferably, prefolding occurs while the at least one nonwoven is guided in a supported manner along a longitudinal section. In this context, a longitudinal section refers to a section along the machine direction overwhich the nonwoven webs are guided during the folding process. In contrast to ring rolling, the nonwoven web is therefore guided essentially force-free along fins extending in the longitudinal direction, the fins engaging with one another in the same way as in ring rolling, thus enabling the nonwoven to be folded. However, the nonwoven is not placed between two rollers at a single point, but along a longitudinal section, which must be sufficiently long to allow the formation of folds despite the web speed. The axial longitudinal section can therefore be at least 500 mm, preferably at least 600 mm long. It is also important that the nonwoven web is guided between the fins without force, so that in the course of folding, the width of the nonwoven web is significantly reduced, while in ring rolling, the nonwoven web is held at the lateral edges. This has the consequence that the nonwoven web is folded, but there is no stretching or overstretching of the material in the cross direction. At the same time, the longitudinal support ensures that the material has sufficient time to form uniform folds across the entire width of the nonwoven web.

c) In the subsequentstep, the elastic laminate is formed by joining the essentially unstretched elastic film web to the folded nonwoven web, of which there is at least one, at a multiplicity of bonding points.

In this manufacturing process, in which the top layer of nonwoven is only folded but essentially not stretched in cross-direction, the connection to the elastic film web occurs in a substantially unaffected state, so that when the laminate is stretched in the cross direction, only the elastic film web is stretched in the areas between the bonding points, while the laminate itself remains unaffected at the bonding points. Consequently, the elasticity is largely determined by the bonding points, although there is greater variability in the adjustment of the elasticity parameters compared to stretch bonding.

As explained above, the elastic film is not stretched in the machine direction during production, although a small amount of stretching can of course occur that is needed to keep the process stable. However, this elongation is below 10% and is therefore not considered significant in the context of the present invention.

A further development of the invention provides that in the stretched state in which the area between the bonding points is essentially free of folds, the surface weightof at least the top layer, respectively of the elastic laminate, at the bonding points is at least 10% greater than the surface weight between the bonding points.

The surface weight of the top layer at the bonding points is particularly between 10 and 100%, especially particularly between 15 and 50%, greater than the surface weight between the bonding points. With respect to the elastic laminate the surface weight at the bonding points can be at least 20 % higher than the surface weight between the bonding points. In this case, particular reference is made to all bonding points.

To achieve such high differences, however, not only the elastic film but also the top layer of the nonwoven must be considered.

In contrast to the solutions known to date, the process described above in particular allows very fine micro-folds to be formed in the cross direction. This is achieved, for example, by stretching the nonwoven web in the machine direction after prefolding. This stretching not only has the effect of refining the coarse prefold structure previously formed in the course of the longitudinal support. At the same time, the stretching in the machine direction also stabilizes the folds in the nonwoven web. However, it is essential that the stretching is only used to maintain the fold structure. There is no structural change to the material of the nonwoven web in the machine direction.

The result of this process is that a very fine micro-folded structure is formed in the nonwoven web, with the micro-folds being significantly narrower than the bonding points. In the course of bonding, a large number of folds can be included in the cross direction in a bonding point. For example, between 6 and 14 folds, in particular between 8 and 12, can be included by justone bonding point. This has the consequence that the material is further compressed during bonding by the folding at the bonding points, so that the elasticity is determined to an even greater extent by the bonding points. Thus, for example, a greater stretch and also a higher tensile strength can be achieved with a small number of integrated folds. By contrast, a larger number of integrated folds results in improved resilience from the stretched to the unstretched state. Depending on the application, the elasticity of the laminate can therefore be significantly influenced, in particular by the design of the bonding points.

A preferred further development of the invention also provides that in an unstretched state, the maximum thickness of the laminate between two bonding points corresponds to at least 1.5 times the thickness at the bonding points, whereby this refers both to two bonding points arranged one behind the other in the machine direction and to two bonding points arranged one behind the other in the cross direction, wherein, with regard to the cross direction, the maximum thickness between two bonding points can correspond to at least twice the thickness at the bonding points. Accordingly, a material is formed which appears comparatively dense to the user, although a material with increased fleecyness and thus better haptics can also be provided. The particularly high thickness can result from the fact that, based on the previously described manufacturing process, the nonwoven web is only folded without stretching and thinning the material. Accordingly, it is present almost unchanged between the bonding points exclusively in the corrugated state, thereby leading to an increased thickness between the bonding points.

According to a preferred embodiment of the invention, the strain at a load of 1000 g in the cross direction is at least 100%. Most preferably, the strain at a load of 1000 g is at least 150%. In accordance with DIN ISO 527, this refers to a test procedure in which a sample 50.8 mm wide (2 inches) is loaded with a weight of 1000 g. The change in length (ΔL) determined in such a measurement can be compared with the original length (L0), where an elongation of 100% means a change in length ΔL by the original length L0. Accordingly, a material with an initial length of 10 mm would have an extended length of 20 mm as a result of a load of 1000 g.

In addition to the extensibility of the elastic laminate, the so-called permanent set is also important, which provides information about how the elastic laminate extends permanently after an initial stretch. To do this, a material sample with a width of 50.8 mm (2 inches) is clamped again and stretched 150% in the cross direction. The material is then returned to the unstretched or force-free state, with the length difference in relation to the original clamping length defining the permanentset. Based on such a measurement, the permanent set after an initial stretch of 150% in the cross direction is a maximum of 30%, and preferably a maximum of 25%.

A laminate of this kind, which on the one hand has a high degree of stretch in the cross direction and at the same time a low permanent set, is suitable for a wide range of products. For example, appropriate laminates are used for what are known as diaper ears, where the high degree of stretch ensures a particularly high level of comfort and a secure closure. At the same time, the low permanent set makes it possible to close the diapers several times without causing a problematic elongation of the diaper ear. Accordingly, the present invention relates not only to elastic laminates but also to products made from such laminates, in particular hygiene products such as diaper ears.

In addition, the elastic laminate can have a comparatively high tensile strength in the cross-direction due to the essentially unprocessed top layer. According to DIN ISO 527, this is at least25 N in the cross direction, and at least 30 N is particularly preferred. For such a measurement, a 50.8 mm (2 inch) wide sample is continuously stretched at a speed of 500 m/min and the force-strain diagram is recorded. The maximum force corresponds to the tensile strength. This is achieved in particular with those laminates produced by the method according to the invention when the laminate is stretched to such an extentthat essentially no folds are visible on the nonwoven top layer. Accordingly, in such a state, the cross-elasticity is exhausted by the folds. In contrast to laminates that are manufactured using neck bonding, the top layer made of nonwoven now has a comparatively high resistance, since the nonwoven has no thinned areas due to the exclusive folding. Accordingly, products can be formed from the elastic laminate that are particularly resistant to external stresses.

The elongation at break is preferably at least 200% in the cross direction according to DIN ISO 527, and at least 250% is particularly preferred.

Although it is sufficient in the context of the invention to join only one nonwoven cover layer to the elastic film, a preferred embodiment is to arrange the elastic film between at least two nonwoven top layers. Accordingly, the elastic film is enclosed between the two nonwoven top layers, both top layers having a plurality of folds running in the machine direction in a non-stretched and thus force-free state in the cross direction. Accordingly, the laminate has a soft and fleecy surface on both sides, which results in a better feel for the user, particularly in the design of hygiene products.

On the basis of such a design, the top layers and the elastic film can then be directly joined to one another. This can be done, on the one hand, by applying dots of adhesive, e.g. from a hot-melt adhesive. However, a design in which the bonding points are formed by ultrasonic welding is particularly preferred. In such a process, pressure is applied to the laminate at the intended bonding points via a so-called anvil roller with protrusions and ultrasonic sonotrodes, which apply ultrasonic energy to melt the top layers and/or the elastic film. In this case, it is conceivable that only the elastic film melts to a certain extent and the two nonwoven top layers are bonded together by the molten material. At the same time, however, it is also conceivable that the introduction of pressure and energy in combination with the web tension of the elastic film causes the elastic film to tear at the bonding points and then the nonwoven cover layers are at least partially or completely bonded directly to one another at the bonding points. This naturally presupposes that the nonwoven is formed from a material which consists at least partially of a thermoplastic filament and/or fibers. In particular, filaments and/or fibers made of a polyolefin, e.g. polypropylene (PP) or polyethylene (PE), are suitable for this.

The formation of the bonding points can be decisive for the elastic behavior of the laminate, with the size of the bonding points and their distance from one another being particularly important. According to a preferred embodiment, the bonding points are arranged in longitudinal rows running in the machine direction and in transverse rows running in the cross direction. In this regard, the arrangement in the cross direction is particularly important, since the material is essentially only elastic in the cross direction. The bonding points can be round, oval, square or rectangular, with the width in the cross direction being particularly crucial for how many folds can be fixed at the bonding point. A particularly preferred embodimentin this context provides that the width of the bonding points in the cross direction is between 0.8 and 2 mm, in particular between 1 and 1.6 mm. The length in the machine direction is preferably between 0.1 and 0.5 mm. Another important factor with regard to elasticity is not only the width of the bonding points and thus the number of possible integrated folds, but also the distance between the bonding points in the cross direction. This distance is preferably between 1 mm and 2.5 mm, in particular between 1.4 and 2 mm. The ratio between the distance of the bonding points in the cross direction and the width of the bonding points also determines the ratio between the completely free folds and the folds that are fixed in the bonding points. The elasticity of the laminate in the cross direction can therefore be adjusted by specifically selecting this ratio, so that, in contrast to the previously known laminates, which were manufactured using the neck-bonding or stretch-bonding method, both the folding and the selection of the pattern for the bonding points are of crucial importance.

According to a preferred embodiment of the invention, the longitudinal rows among themselves and the transverse rows among themselves are identical in terms of the arrangement and design of the bonding points. Nevertheless, it may also be useful for the bonding points of a longitudinal row and/or a transverse row that are directly adjacent to one another to have different sizes.

Furthermore, it may also be useful to arrange the bonding points of two longitudinal rows adjacent to one another in the machine direction and/or in the cross direction so that they are offset from one another in the machine direction.

The location and design of the bonding points is also crucial for the fold structure in the laminate. The folds that run from the bonding points in the machine direction are usually significantly narrower than the folds that are not integrated along the machine direction via a bonding point. It should be noted that the bonding points are introduced during production in a folded state of the nonwoven web, which has a large number of micro-folds arranged next to each other. By introducing the bonding points, the micro-folds are then fixed at the bonding point, while outside the bonding points the micro-folds essentially form a macro-fold together, caused by at least a partial unfolding. Accordingly, the folds that are integrated in a cross-direction in a bonding point are micro-folds, while the folds between the bonding points are macro-folds. In this context, a micro-fold is a fold with a width of less than 1 mm or less, respectively less than 0.5 mm, while a macro-fold has a width of more than 0.5 mm, in particular more than 1 mm. Furthermore, the micro-folds usually don't have such a defined fold formation as the macro-folds, which comprise a more random and non-linear fold structure.

Although the folds between the bonding points are macro-folds, a close examination also reveals the micro-fold structure. Usually, the micro-folds are arranged relatively evenly along the cross-direction before the bonding points are applied. However, it is also possible that several micro-folds form a certain macroscopic pre-structure, which has an influence on the structure of the laminate after the bonding points have been applied.

Due to the integration of folds into the bonding points there is a higher material density in the laminate and/or at least in the top layer in the bonding points compared to the material density in the areas between the bonding points in a stretched state. In a stretched state in which the top layer is essentially free of wrinkles, the ratio between the density in the bonding points and the density of the folds outside the bonding points is at least 0.1 and 0.6, preferably between 0.15 and 0.5.

In addition, however, it is also conceivable that individual folds from the areas between the bonding points have a significantly greater height and/or width than the folds inside the bonding points.

The factthat the cross-section of the folds between the bonding points differ from each other are caused by two separate aspects. Initially, the pre-folding process may result in individual pre-folds being overfolded, so that, due to the position of the bonding points, individual pre-folds are trapped in the bonding points over a comparatively large area. This naturally means that the adjoining folds outside the bonding points can fold up more or less material, so that the folds between the bonding points vary in size. A further aspect is achieved in particular by a subsequent activation of the elastic laminate in the cross direction, pulling individual folds out of the bonding points.

In this case, individual folds then have a fold height which is at least 10%, preferably at least 20%, greater than the mean fold height and/or width in the laminate. This refers to an average fold width or height, which is averaged over all the folds outside the bonding points.

A preferred embodiment of the invention provides that an open hole force (OHF) is between 30 and 140 N. This parameter is determined using a measuring device, which is explained in more detail below in connection with Fig.. When measuring this parameter, a sample is fixed on a sample holder, which hasan an internal diameter D_{H} of 35 mm. Then the laminate is stressed with a mechanical finger, the size of which is based on a human finger. The mechanical finger is cone-shaped and has a base area with a diameter D_{T} of 20 mm and a length Z_{T} of 15 mm. At the tip, the mechanical fingeris rounded with a radius R_{T} of 5 mm. This mechanical finger has a surface material made of neoprene rubber having a hardness between 5 and 20 HRC. The mechanical finger is then guided in the direction of the specimen holder and presses the elastic laminate over the tip into the open area of the specimen holder formed by the inner diameter. The speed at which the mechanical finger is inserted is 1260 mm/min. The force is then recorded until the breaking elongation limit is reached, with the maximum measured force corresponding to the puncture hole force (OHF).

A further development of the invention also provides that the elastic film has an elastic film layer and at least a first non-elastic outer layer coextruded with the elastic film layer. Preferably, a first and a second non-elastic outer layer are coextruded with the elastic film layer, the elastic film layer being arranged between the first and the second outer layer. In principle, various materials are suitable for forming the outer layers and the elastic film layer. The elastic film layer is preferably made from polyolefin elastomers or styrene block copolymer compounds. This styrene block copolymer compounds may, for example, be a styrene-isoprene-styrene block copolymer (SIS), a styrene-butadiene-styrene block copolymer (SBS), a styrene-ethylene-butylene-styrene (SEBS) or a styrene-ethylene/propylene-styrene block copolymer (SEPS). Furthermore the styrene block copolymer compounds may be mixed with a polyolefin, i.e. a polyolefin elastomers, or a polyolefin mixture. Particular preference is given to the styrene block copolymer being a styrene-ethylene-propylene-styrene block copolymer (SEEPS), SEEPS having the special feature that it can be mixed particularly well with polyolefins. Accordingly, processing agents such as mineral oil can be dispensed with.

The second polymer component is preferably present in an amount between 25 and 90% in the elastic film layer. In addition to a polyolefin ora polyolefin mixture, polystyrene or processing agents may also be provided. The processing agents may in particular be mineral oil.

In a preferred embodiment, the first and/or second outer layers are formed from a polyolefin as the main constituent. In this context, "main constituent" means that the polyolefin is present in the first and/or second outer layer in a proportion of at least 30% by weight. It is particularly preferred for at least 45 wt.% of the polyolefin to be present in the respective first and/or second outer layer, and particularly preferred for at least 50 wt.% to be present. The polyolefins of the outer layers and/or the elastic film layer are preferably polyethylene, polypropylene or mixtures thereof. In the case of polyethylene, this is in particular a low-density polyethylene (LDPE) or a linear low-density polyethylene (LLDPE). The first and/or second outer layer may also contain 2 to15% fillers such as chalk or talc.

A particularly preferred embodiment in this context provides that the ratio of the thickness of the elastic film layer to the thickness of the first and/or second outer layer is between 6:1 and 15:1, in particular between 7:1 and 12:1. In particular, it is envisaged that the first and/or the second outer layer has a thickness between 1 µm and5 µm, preferably between 1.5 and 4 µm, particularly preferably between 2 µm and 3.5 µm. By contrast, the elastic film layer has a thickness between 15 and 40 µm, particularly between 20 and 30 µm.

The laminate according to the invention is in particular obtainable by the process described below. The process comprises at least the steps:
a) supplying at least one nonwoven web and one elastic film web in a machine direction,
b) formation of folds at least by prefolding the at least one nonwoven web in the cross direction, preferably while guiding the nonwoven web in a supported manner along a longitudinal section,
c) formation of the elastic laminate by joining the essentially unstretched elastic film web to the at least one nonwoven web that has been folded at a multiplicity of bonding points.

In this context, an essentially unstretched elastic film means that the stretch of the elastic film web in the machine direction is less than 10%. In this context, it should be noted that due to the web tension, a certain stretch of the elastic film can occur, but this unintended stretch does not exceed a value of 10% depending on the thickness and the stiffness of the skin layers.

The prefolding during the supported guidance takes place over a longitudinal section with a length between 500 mm and 1500 mm, in particular between 600 and 1200 mm. In contrast to the so-called ring rolling process, the formation of the prefolds during the longitudinal section occurs in a static manner, whereby the nonwoven web is guided between a series of upper and lower interlocking fins. The distance between the fins and the extent to which the fins interlock are decisive for the folds that are formed as a result.

In particular, the distance between two in cross direction arranged consecutive fins is between 5 mm and 50 mm. The degree to which the upper and lower fins engage with each other is preferably between 5 mm and 40 mm. The upper and lower rows of fins are part of a folding device, whereby the nonwoven web, after leaving the fins, has a folding which is often too coarse for the intended laminate.

This type of pre-folding, in which the nonwoven web is guided over fins in a straight line and without tension, also differs significantly from the folding of a material web in a roller gap or by wrapping around a profiled roller.

In view of this, it is necessary to convert the rough pre-folds into finer micro-folds. Accordingly, the folding in step b) during the supported guidance merely forms a kind of pre-fold, with the fully formed folds having a sign ificantlysmallerwidth and height than the pre-folds.

In order to achieve such a micro-fold, the nonwovenweb,which has already been pre-folded, can then be stretched in the machine direction by at least 10% during step b). This stretching must be carried out after the pre-folding, which ensures that the micro-folds are formed evenly over the cross-directional width of the nonwoven web. If the nonwoven web were stretched during the folding process, the folds in the center of the nonwoven web would be significantly larger than at the edges, since the material could not be fed evenly into the area between the fins and would therefore be stretched more in the center. The subsequent stretching transforms the pre-folds into micro-folds, while the width of the nonwoven web no longer changes. At the same time, the application of the stretch also stabilizes the folds in the nonwoven web, so that the folded nonwoven web can then be joined to the elastic film. However the pre-folds can still exist as overall structure containing the micro-folds.

It is particularly preferred that the nonwoven web is stretched between 10% and 30%, especially between 15 and 25%. The stretching can be achieved by rollers running at different speeds. However, it must be ensured that the stretching only stabilizes and reshapes the folds, while the structure of the nonwoven webs in the machine direction remains unchanged.

The nonwoven web is bonded to the elastic film web in a folded state of the nonwoven web, with the bonding points being greater than the micro-folds of the nonwoven web. Accordingly, it is possible that the bonding points incorporate a large number of micro-folds. This has the consequence that the material density, which is particularly noticeable through the surface weight, is increased in the area of the bonding points compared to the areas between the bonding points in a cross-directionally stretched state, since unfolding of the folds in the area of the bonding points is not possible in the course of stretching.

A further development of the process envisages a step e) following step d): activation of the elastic laminate in the cross direction. Accordingly, the elastic laminate can be activated in the cross direction after joining the nonwoven web with the elastic film web. This is done, for example, by means of the ring rolling process already explained. The activation rate can be between 100 and 400 %. This is a comparatively high degree of lateral strain, which can cause the formation of a hole structure at the bonding points or reinforce an already formed hole structure. This hole structure is particularly the result of melting and/or tearing of the elasticfilm web in the course of forming the bonding points, whereby the openings of the hole structure either directly adjoin the bonding points or even completely enclose them. Accordingly, activation in the cross direction can, for example, improve air permeability.

Furthermore, activation in the cross direction can also be used specifically to influence the elasticity of the laminate in the cross direction. In this context, it has already been explained that a large number of micro-folds can be trapped in the bonding points during the formation of the bonding points. In particular, the number of micro-folds is between 6 and 14 per bonding point. As a result of the subsequent activation of the laminate in the cross direction with a high degree of lateral strain, individual micro-folds can then be pulled out of the bonding point. Furthermore the material of the micro-folds can orient, fray and/or partially tear. According to that the number of trapped micro-folds in the bonding points is reduced, which leads to the fact that in particular the folds directly adjacent to the bonding points have a larger cross-section in height and/or width, since the pulled-out micro-folds can merge with the adjacent folds. In the course of activation in the cross direction, between two and four micro-folds can be released from individual or all bonding points. In this respect, activation in the cross direction represents a further means of adjusting the elasticity in the cross direction in a targeted manner. Another aspect for the irregular formation of the folded structure is that the independent arrangement between the bonding points and the pre-fold structure of the nonwoven web also causes folded areas of the nonwoven webto be enclosed in the bonding points. This can also lead to altered cross-sections in the finished laminate.

For the formation of the elastic laminate, it is also of crucial importance that the nonwoven web and the elastic film web are precisely dimensioned with regard to their width in the supplied state, whereby in particular the reduction in the width of the nonwoven web in the course of folding must be taken into account Preferably, the width of the folded nonwoven web is between 40 and 80% of the width of the nonwoven web without folds.

The bonding points are preferably created by ultrasonic welding. Alternatively, however, it is also conceivable to join the nonwoven web to the elastic film web using adhesive points, in which case an adhesive pattern is applied between the nonwoven web and the elastic film.

A further development of the invention also provides that in a final step f) the elastic laminate is wound up.

Furthermore, at least two nonwoven webs can be supplied and folded, whereby the elastic film web is inserted in a substantially unstretched state between the folded nonwoven webs and is connected to them at the bonding points. Usually, the two nonwoven webs are folded in an identical manner, but it is also conceivable, in principle, to use nonwoven webs that are folded differently for the two sides of the laminate, so that a differentfeel is obtained on the two sides of the laminate.

To form the bonding points, it may also be useful for the nonwoven webs to be directly connected to each other through holes in the elastic film. This requires that the nonwoven webs be formed at least in part from a thermoplastic material. However, it is also conceivable that the material of the elastic film remains at the bonding points, which also acts as a kind of hot-melt adhesive.

The invention will be explained in more detail below with the help of exemplary drawings and examples. The figures show:
- Fig. 1: an elastic laminate according to the invention in a sectional view
- Fig. 2: a schematic representation of the manufacturing process according to the invention for forming a laminate according to Fig. 1
- Fig. 3: a schematic representation of a folding device for folding the nonwoven webs
- Fig. 4A to 4C: schematic representation of formation of folds
- Fig. 5A to 5D: various patterns for the formation and arrangement of the bonding points
- Fig. 6A, 6B: schematic representation of the influence of subsequentring rolling on material density

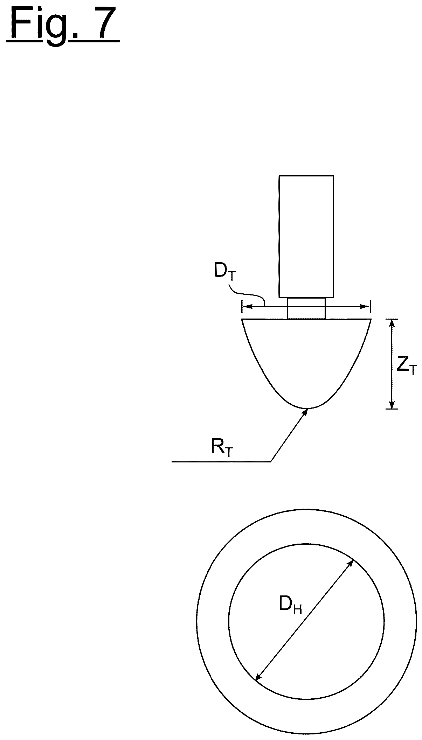

- Fig. 7: schematic representation of the open hole force measurement

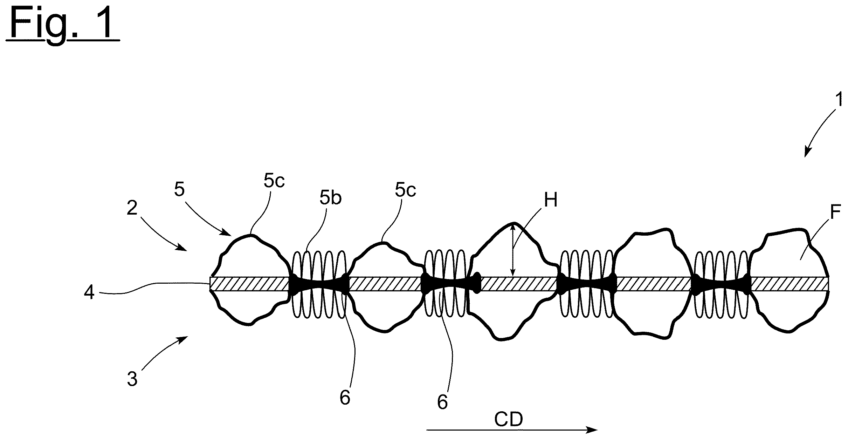

Fig. 1 shows an elastic laminate 1 with a first and a second top layer 2, 3 made of a nonwoven and an elastic film 4 arranged between the top layers 2, 3. The illustration in Fig.1 shows the elastic laminate 1 along a cross-direction CD which, in the course of the manufacturing process, is arranged perpendicular to a machine direction MD.

The top layers 2, 3 have a multiplicity of folds 5 each running in the machine direction MD, whereby the folds 5 in cross-section lead to a waveform in cross-direction CD. The elastic film 4 is connected to the top layers 2, 3 at a multiplicity of bonding points 6 spaced in the machine direction MD and in the cross direction CD.

The special feature of the elastic laminate 1 is that the folds 5 between the bonding points 6 in an unstretched state along the cross-direction are shaped as macro-folds 5b, which have a differentcross-section. As one can see in Fig. 1 the macro-folds 5b differ in their shape and/or form, wherein the form of the macro-folds 5b can be described with respect to their area F or their height H. As a consequence the laminate 1 has an irregularcorrugated surface, which is formed on both sides by the top layers 2, 3.

Furthermore, in a state stretched in the cross direction CD, in which the top layers 2, 3 are essentially free of macro-folds 5c in the stretching direction, the surface weight at the bonding points 6 is greater than the surface weight between the bonding points 6. This is essentially achieved by two different aspects.

On the one hand, the top layers 2, 3 are folded. However, no material-technical processing of the nonwoven webs 8 from which the top layers 2, 3 are formed is carried out. In the present case, the top layers 2, 3 are laid exclusively in micro-folds 5b without any material processing, so that the nonwoven or the top layers 2, 3 have an identical surface weight in an unstretched state regardless of the position in the cross direction CD. However, when stretched, the elastic film 4 becomes thinner, while it is necessarily fixed in the bonding points 6 in the unstretched state.

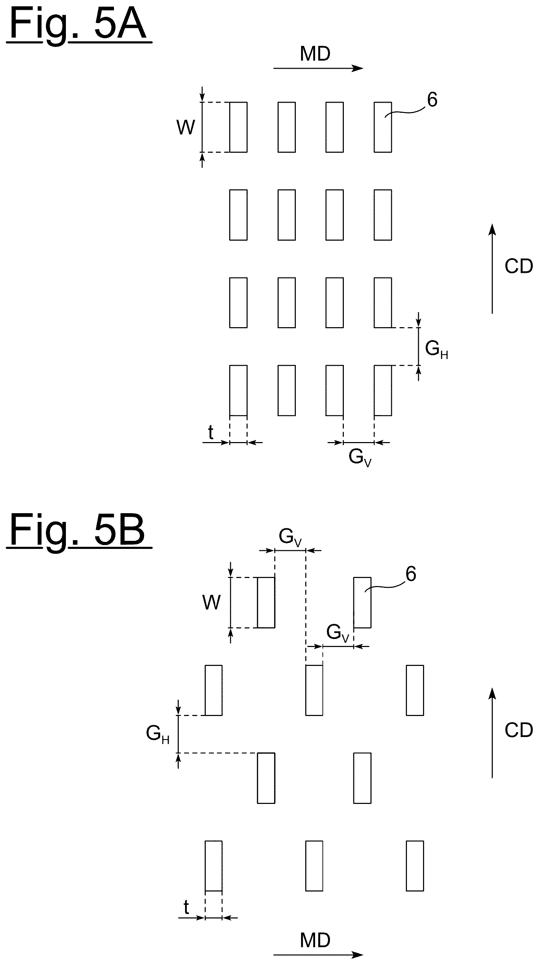

A second, even more decisive aspect is that the bonding points 6 are larger than the width of the micro-folds 5b in an area of the bonding points 6. This effect will be described later with respect to the manufacturing process. However the width of the micro-folds 5b in the bonding point 6 can be less than 0,5 mm. These micro-folds 5b are shown in more detail in Fig. 5B. The width of the bonding points 6 is between 1 mm and 6 mm. As a result, several micro-folds 5b are usually enclosed at each of the bonding points6. In the example shown in Fig. 1, two or three folds 5 are schematically integrated into each bonding point6. However, this is only a schematic representation to better illustrate the facts. As a rule, between 6 and 14 folds 5 are arranged within a bonding point 6.

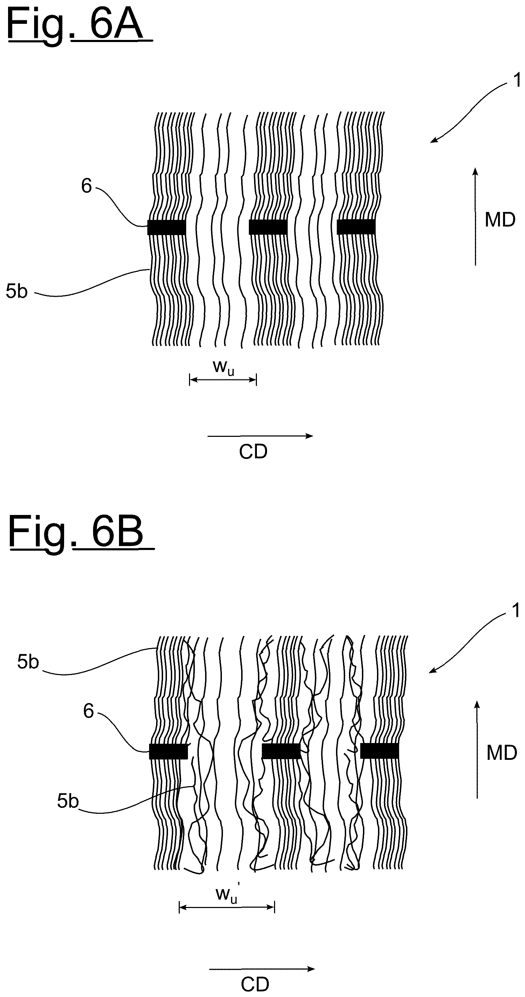

By integrating several micro-folds 5b into the bonding points 6 and stretching the laminate 1 in a cross direction afterwards, the material density or the surface weight is significantly increased compared to the areas W_{U}' between the bonding points 6, which is exemplary shown in Fig. 6B. On the basis of the representation in Fig. 1 and 6, it is also clear that due to the melting of the top layers 2, 3 at the bonding points 6 these bonding points 6 are more or less free of any fold 5. However, the micro-folds 5c being trapped at the bonding points 6 run across the machine direction MD and are therefore visible behind the bonding points 6. For that reason, Fig. 1 shows the micro-folds 5c at the bonding points 6, wherein these micro-folds 5c start in reality behind the bonding points 6 in machine direction 6.

The measures described above make it possible to design the basis weightat the bonding points 6 to be at least 10% greater than the basis weight between the bonding points 6 in the stretched state. The basis weight of the entire elastic laminate can be between 70 and 110 gsm on average, with the basis weight being largely determined by the top layers 1, 3.

### Top layers 2, 3

Nonwovens are used in particular for the top layers. These nonwovens can be spunbond, spunlace, carded, airlaid or meltblown nononwoven. Spunbond nonwovens are preferred. In the spunbond process, so-called spun fibres, which are spun as continuous filaments from a melt or solution, are stretched in the longitudinal direction. The individual fibres are then fused using suitable measures to form a nonwoven from an initially loose arrangement of filaments.

Furthermore, it is advantageous that the fibers are usually formed from a thermoplastic material, so that the filaments can also be partially fused together by the application of heat. To do this, the nonwoven web can be passed through an oven, for example, in which hot air is applied to the nonwoven web. The hot air penetrates the nonwoven web and causes partial melting of the filaments. This does not significantly destroy the structure of the filaments. Rather, the surface melts, allowing the filaments to bond with each other. Furthermore, it is also conceivable to bond the nonwoven webs together at discrete points using the so-called thermoembossing process. In this process, fusing points are created at discrete points by the targeted application of pressure and temperature, with the size and number of the fusing points being decisive for the strength of the nonwoven. Instead of fibres that are entirely made of a thermoplastic material, it is also possible to combine different materials for the fibres. One possibility are so-called bi-component fibres which are made of two different materials, wherein a first polymer forms a core and a second polymer forms a coat, wherein it is sufficient when only the second polymer is chosen form a thermoplastic polymer. Alternatively fibre mixtures can be used, wherein thermoplastic fibres and non-thermoplastic fibres are mixed. In this case even natural or semisynthetic fibres can be used.

The top layers 2, 3 made of nonwoven are preferably formed from filaments, which in turn consist of polypropylene or polyethylene. In the case of polyethylene, low-density polyethylene (LDPE)or linearlow-density polyethylene (LLDPE) are preferred.

Of course, it is also conceivable that other types of fibers or filaments not made of a thermoplastic material are added to the nonwoven top layers, 2, 3. These may be natural fibers such as cotton fibers. However, the main component of thermoplastic filaments ensures that the cover layers 2, 3 can be treated with heat and, in particular, can be fixed to the elastic laminate 1 in a subsequent bonding process with the elastic film 4. A main constituent is understood to mean that the continuous filaments of thermoplastic material are present in the top layers 2, 3 in each case in an amount of at least 30% by weight, in particular at least 50% by weight.

### Elastic film 4

The elastic film consists of an elastic film layer and at least a first non-elastic outer layer coextruded with the elastic film layer.

The non-elastic outer layer is used in particular to produce the elastic film. The non-elastic layer ensures that the coextruded material is interlocked during coextrusion, which considerably simplifies the handling of the elastic film. In addition, the non-elastic outer layer is also used to maintain a web tension. It should be noted that the films are usuallytransported in a machine direction (MD) during the manufacturing and processing, whereby a web tension must be applied to the elastic films in the machine direction. If the elastic film were formed exclusively by the elastic film layer, this web tension would cause the material to lengthen, at least in some areas, and complicate the processing. In the present case, the elastic film is to be joined to the top layers 2, 3 in a substantially unstretched state, whereby a substantially unstretched elastic film is understood to be a film that is stretched by a maximum of 10% in the machine direction. In particular, the non-elastic film layers are intended to influence the material of the elastic film layer in some way.

Preferably, the elastic film is formed from two non-elastic film layers which are coextruded together with the elastic film layer and enclose it between them. With regard to the exact design of the elastic film, the invention is not limited to any particular design.

Tables 1 and 2 show particularly preferred designs of the elastic film 4 that have been used for the elastic laminate 1 in the examples.

**Table 1**

| **Layer / Type A** | **Thickness [µm]** | **Composition [wt%]** |
|---|---|---|
| **First non-elastic outer layer** | 3,5 | 57 % PE + 45 % PP + 8 % Talc |
| **Elastic film layer** | 28 | 80 % SBS + 12 % PS + 8 % Mineral Oil |
| **Second non-elastic outer layer** | 3,5 | 57 % PE + 45 % PP + 8 % Talc |

**Table 2**

| **Layer** / **Type B** | **Thickness [µm]** | **Composition [wt%]** |
|---|---|---|
| **First non-elastic outer layer** | 3 | 57 % PE + 45 % PP + 8 % Talc |
| **Elastic film layer** | 24 | 60 % POE + 40 % SEEPS |
| **Second non-elastic outer layer** | 3 | 57 % PE + 45 % PP + 8 % Talc |

The tables show that the non-elastic outer layers are significantly thinner than the elastic film layer, with a 28 µm thick elastic film layer and 3.5 µm thick non-elastic outer layers being used for the elastic film 4 of type A. In contrast, the elastic film 4 of type B is generally thinner, with the non -elastic outer layers being 3 µm thick and the elastic film layer 24 µm thick.

The non-elastic outer layers consist mainly of a polyolefin, with a polyolefin blend of 57% polyethylene and 35% polypropylene being used in both examples. In addition, 8% talc is present in the non-elastic outer layers.

The elastic layers of the film differ between type A and type B in that a styrene-butadiene-styrene copolymer (SBS) and 12% polystyrene were used for type A. In addition, 8% mineral oil is found in the elastic layer of the film, which mainly serves as a processing agent.

According to Type B, the elastic film layer is formed from 60% of a polyolefin blend and 40% of a styrene-ethylene-propylene-styrene block copolymer (SEEPS). Processing agents are not required in this context due to the good miscibility between SEEPS and a polyolefin.

### Manufacturing process

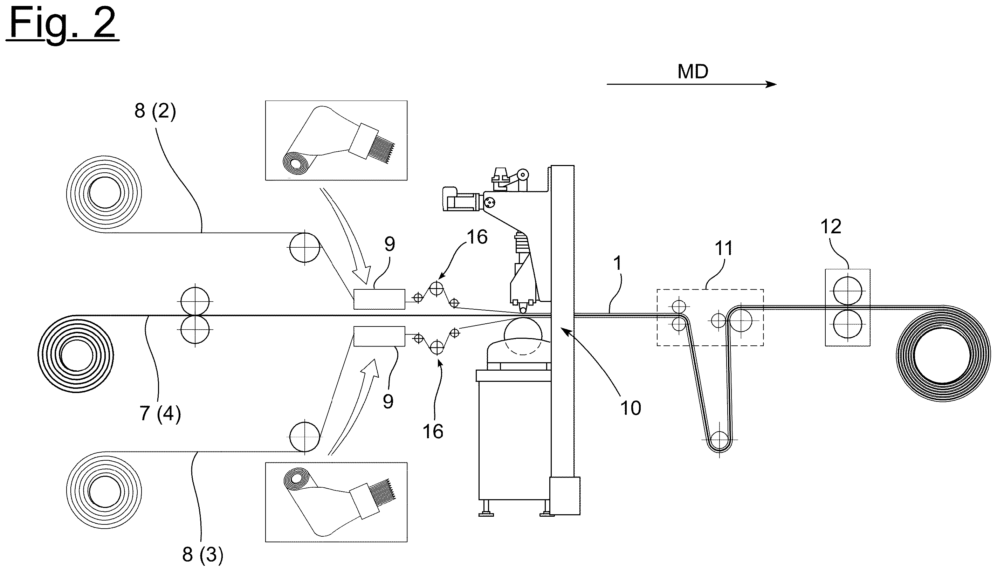

Fig. 2 showsa schematic representation of the manufacturing process for forming an elastic laminate 1 according to Fig. 1.

In a first step, the elastic film4 is supplied in the form of an elastic film web 7. The cover layers 2, 3 are also each supplied as a nonwoven web 8 and moved together with the elastic film web 7 in the machine direction MD.

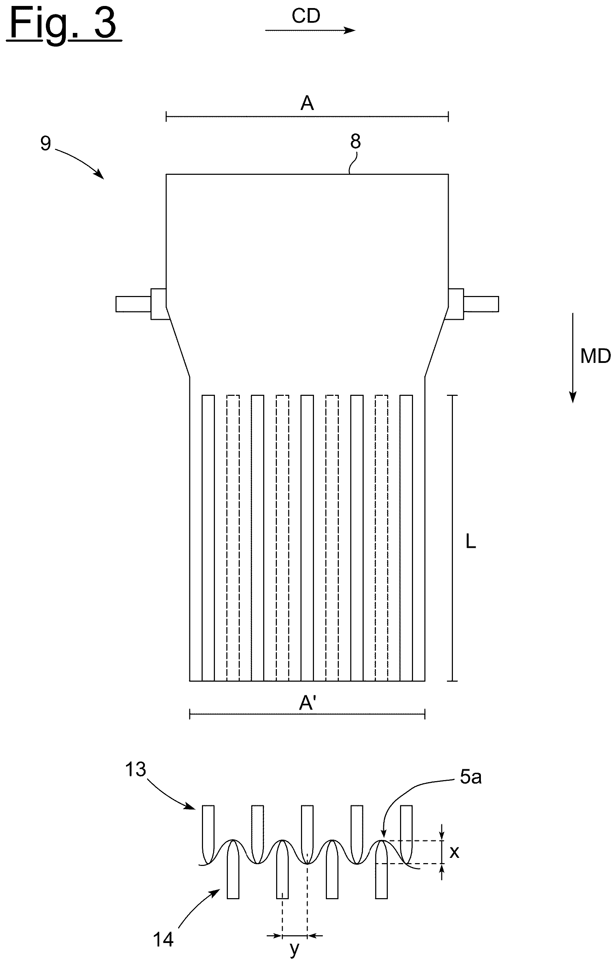

The nonwoven webs 8 are then each fed to a folding device 9, which pre-folds the nonwoven webs 8 in the cross-direction CD. This pre-folding process is shown in Fig. 3, whereby in the course of the pre-folding process the width of the nonwoven web 8 is converted from a width in the original state A to a width in the folded state A'. The ratio between the width in the folded state A' and the width in the unfolded state A is preferably between 0.4 and 0.9.

Of particular importance in this context is the folding device 9, which is explained in more detail in Fig. 3 in a schematic representation. In contrast to the solutions known from the prior art, the nonwoven webs 8 are pre-folded, whereby the pre-folds are subsequently converted into folds 5 in the form of micro-folds 5b. The pre-folding results in a particularly even distribution of the folds 5.

For this purpose, the nonwoven web 8 is supplied to the folding device 9 and the nonwoven web 8 is guided between an upper and a lower row of fins 13, 14, the fins 13, 14 guiding the nonwoven web 8 along a longitudinal section L in the machine direction MD in a supported manner. The length of the longitudinal section L is preferably 800 mm. The length is crucial for ensuring that a corresponding folding can take place between the upper and lower rows 13, 14 of fins. The upper row 13 and the lower row 14 of fins are preferably arranged in relation to one another in such a way that they interlock, with the extent of the interlocking x preferably being between 5 and 50 mm. The distance between two spaced fins y is preferably between 5 and 40 mm. Due to this constraction pre-folds are formed in the nonwoven webs 8.

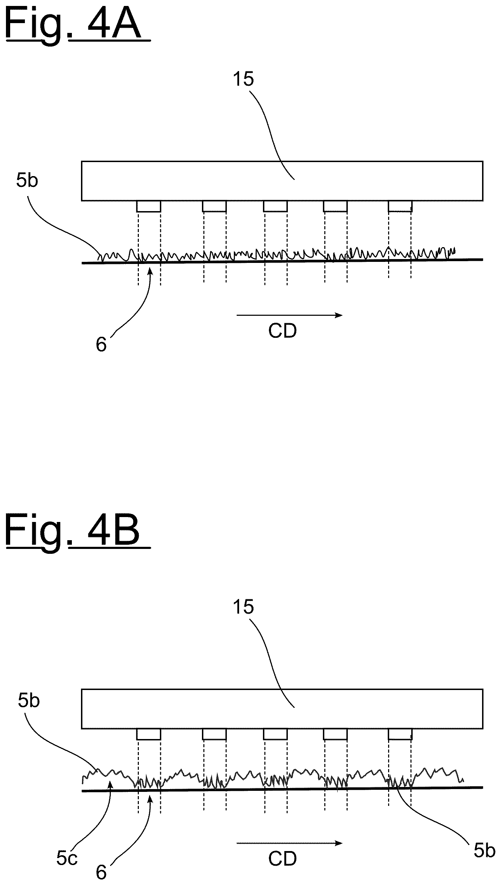

The nonwoven webs 8 that have already been pre-folded in cross direction CD are then stretched in a stretching device 16 in the machine direction MD afterwards. This is essentially achieved by different roll speeds. Due to these different speeds, the nonwoven webs 8 that have already been pre-folded are stretched by at least 10 %. This ensures that the initially very roughly formed pre-folds are converted into micro-folds 5b, which are shown in Fig. 4A. At the same time, the web tension that causes the stretching ensuresthatthe nonwoven webs 8 that have been folded also remain in the folded state and do not fall apart.

The nonwoven webs 8 are then joined to the elastic film web 7 in the joining device 10. This is advantageously done by means of ultrasonic welding. In this case, a pattern of bonding points 6 is generated by means of an anvil roller 15 which is shown in Fig. 4A, and the nonwoven webs 8 and elastic film web 7 are joined to one another by means of these bonding points 6. In the present case, the elastic film web 8 is preferably melted so that the two nonwoven webs 8 are then welded directly to one another. This also causes openings to form at the bonding points 6, which results in a particularly high air permeability.

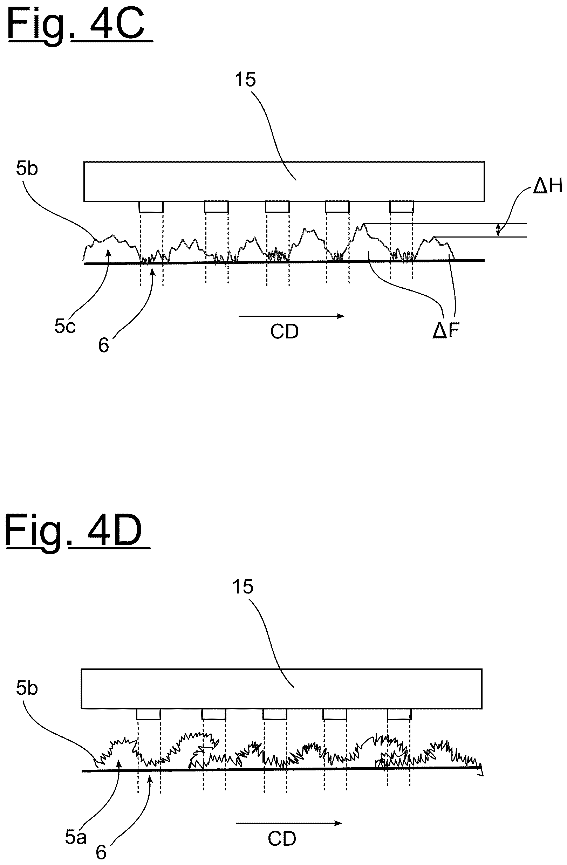

In this context, it is important to note that the position of the structure of the folds 5 after the folding device 9 is not specifically assigned to the position of the bonding points 6. Therefore, according to Fig. 4D, it is possible that a plurality of mico-folds 5b form a macro-structure 5a, which can also be overfolded. The bonding points 6 can then be introduced in areas where overfolding has taken place.

The overfolding has the consequence that in the finished laminate 1 individual macro-folds 5c between the bonding points 6 differ in their cross-sectional area other macro-folds 5c. These differences being noticeable in a difference in the area F or in the height H of the macro-folds 5c outside of the bonding points 6.

According to Fig. 4B the micro-folds 5b outside the bonding points 6 together form a macro-fold 5c. Accordingly, the folds 5 which run in machine direction MD and which are trapped in a bonding point 6 are designed as micro-folds 5b, wherein the folds 5 that are not trapped in a bonding point 6 are designed as macro-folds 5c, due to an unfolding of the micro-folds 5b.

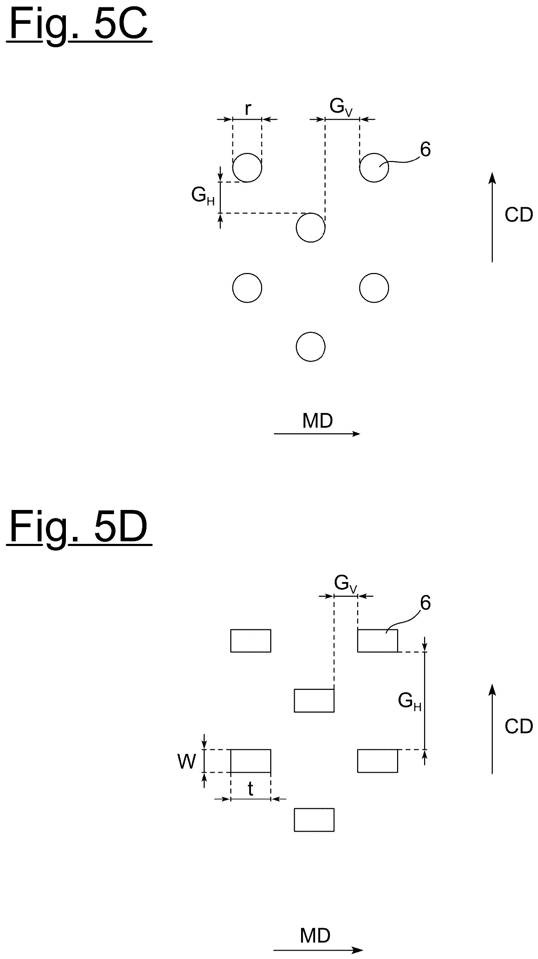

Figs. 5A, 5B, 5C, 5D show various patterns of bonding points 6 that can be used within the bonding device 10 for attaching the nonwoven web 8 and the elastic film web 7.

Figure 5A shows rectangular bonding points 6, which are arranged regularly in both the machine direction MD and the cross direction CD. Accordingly, bonding points 6 are provided at all positions in the machine direction MD and in the cross direction CD. These bonding points 6 have a width W in the cross direction CD and a depth t in the machine direction MD.

According to Fig. 5B, the bonding points 6 are arranged offset to one another in relation to the design in Fig. 5A, with only every second position occupied by a bonding point 6 in both the machine direction MD and the cross direction CD. Figure 5D is based on Figure 5B, with the bonding points 6 now having a greater depth than width W. According to Figure 5C, the bonding points are circular.

Regardless of the specific design, a large number of micro-folds 5b are always incorporated in a bonding point 6 as can be seen in Fig. 4B. This leads to an increased surface weight in the area of the bonding points 6 in a stretched state, in which the areas between the bonding points 6 are essentially free of folds 5. This relationship is shown in Fig. 6A as an example. In the stretched state, a width Wᵤ forms between the bonding points 6, with the folds 5, which are now essentially lying flat, still being indicated.

At the same time, an activation device 12 can be used to activate the elastic laminate 1 in the cross direction CD. This serves in particular to expose the holes at the bonding points 6. At the same time, it can also be used to cause individual micro-folds 5b to be pulled out of the bonding points 6. Activating the laminate 1 (Fig. 4C and 6B) in the cross-direction CD pulls individual micro-folds 5b out of the bonding points 6. Alternatively, it is also conceivable that the micro-folds 5b tear or expand in the area of the bonding points 6. These micro-folds 5b result in the macro-folds 5c outside of the bonding points 6 having an irregular cross-sectional shape (Fig. 4C), which has already been explained. At the same time, the width Wᵤ' of the area between the bonding points 6 is extended compared to the non-activated laminate 1. The combination of the folding device 9, the stretching device 16, the bonding device 10 and the activation device 12 allows the elasticity of the elastic laminate 1 to be adjusted in a targeted manner.

Such a design has the advantage that it allows particularly uniform stretching in the cross direction CD.

The web tension can be set in a controlled manner by means of a tension control unit 11.

### Examples of embodiment

Table 3 shows various design examples of the elastic laminate 1, which differ essentially in terms of the materials used for the cover layers 2, 3, the elastic film 4, the pattern of the bonding points 6 and the cross-activation. The cross-activation is shown with respect to the depth of engagement (DOE). This parameters defines how far the discs of the ringroller overlap. Accordingly, it is a parameter that was described in an analogouswaywith the value x in connection with the folding device 9. In contrast to the folding device 9, however, the insertion of the laminate 1 is not force-free, so that the laminate 1 is stretched between successive discs. The extent of this stretching correlates with the parameter DOE, where a higher DOE causes a greater stretching.

The different examples are listed in Table 3. Based on the various examples, different measurements were carried out, which are listed in Tables 4 and 5.

The measurement results show that the elastic laminate 1 has a particularly high elongation at a load of 1000 g in the cross direction (CD), which is more than 100% or even more than 150%. At the same time, the permanent set after an initial cross strain of 150% is comparatively low, at a maximum of 25%. The values determined in this context were obtained using the measurement methods described above.

**Table 3**

| | **Ex. 1** | **Ex. 2** | **Ex. 3** | **Ex. 4** | **Ex. 5** | **Ex. 6** | **Ex. 7** | **Ex. 8** | **Ex. 9** |
|---|---|---|---|---|---|---|---|---|---|
| **Top Layer 2** | Spunbond 24 gsm | Spunbond 24 gsm | Spunbond 24 gsm | Spunbond 19 gsm | Spunbond 19 gsm | Spunbond 20 gsm | Spunbond 19 gsm | Spunbond 19 gsm | Spunbond 19 gsm |
| **Elastic Film 4** | Type A | Type A | Type B | Type A | Type A | Type A | Type A | Type A | Type A |
| **Top Layer 3** | Spunbond 24 gsm | Spunbond 24 gsm | Spunbond 24 gsm | Spunbond 19 gsm | Spunbond 19 gsm | Spunbond 20 gsm | Spunbond 19 gsm | Spunbond 19 gsm | Spunbond 19 gsm |

| **Bonding Pattern** | | | | | | | | | |
|---|---|---|---|---|---|---|---|---|---|
| **Type** | Fig. 4A | Fig. 4A | Fig. 4A | Fig. 4A | Fig. 4A | Fig. 4C | Fig. 4A | Fig. 4B | Fig. 4A |
| **W** | 1,4 mm | 1,4 mm | 1,4 mm | 1,4 mm | 1,4 mm | - | 1,0 mm | 0,7 mm | 0,5 mm |
| **t** | 0,3 mm | 0,3 mm | 0,3 mm | 0,3 mm | 0,3 mm | - | 0,3 mm | 0,7 mm | 1,0 mm |
| **Gv** | 1,75 mm | 1,75 mm | 1,75 mm | 1,75 mm | 1,75 mm | 1,7 mm | 2,0 mm | 1,7 mm | 1,4 mm |
| **G_{H}** | 1,0 mm | 1,0 mm | 1,0 mm | 1,0 mm | 1,0 mm | 3,5 mm | 0,8 mm | 3,5 mm | 1,5 mm |
| **r** | - | - | - | - | - | 0,7 mm | - | - | - |

| **Nonwoven Corrugation** | | | | | | | | | |
|---|---|---|---|---|---|---|---|---|---|
| **A'/A** | 40 - 80 % | 40 - 80 % | 40 - 80 % | 40 - 80 % | 40 - 80 % | 40 - 80 % | 40 - 80 % | 40 - 80 % | 40 - 80 % |

| **CD - Activation of the Laminate** | | | | | | | | | |
|---|---|---|---|---|---|---|---|---|---|
| **Depth of Engagement Ringrollers** | 4, 5 mm | 3, 5 mm | 3, 5 mm | 4,0 mm | 3, 25 mm | - | 3,5 mm | 3,5 mm | 3, 5 mm |

**Table 4**

| | **Ex. 1** | | **Ex. 2** | | **Ex. 3** | | **Ex. 4** | |
|---|---|---|---|---|---|---|---|---|
| | **unactivated** | **activated** | **unactivated** | **activated** | **unactivated** | **activated** | **unactivated** | **activated** |
| **' Extensibility [%] (CD)** | 150 | 273 | 160 | 200 | 145 | 213 | 218 | 238 |
| **Elongation @break [%]** | 414 | 522 | 404 | 403 | 430 | 370 | 480 | 485 |
| **Caliper [mm]** | 1,1 | 2, 0 | 1,0 | 1,3 | 1,8 | 2,0 | 1,2 | 2,0 |
| **Basic Weight [gsm]** | 91 | 90 | 100 | 98 | 87 | 84 | 103 | 101 |
| **Tensile Strength (C) [N]** | 51 | 46 | 45 | 44 | 53 | 51 | 36 | 30 |
| **Permanent Set (CD) [%]** | - | 17 | - | 24 | - | 20 | - | 22 |

**Table 5**

| | **Ex. 5** | | **Ex. 6** | **Ex. 7** | | **Ex. 8** | | **Ex. 9** | |
|---|---|---|---|---|---|---|---|---|---|
| | **unactivated** | **activated** | | **unactivated** | **activated** | **unactivated** | **activated** | **unactivated** | **activated** |
| **Extensibility [%] (CD)** | 150 | 175 | 200 | 115 | 180 | 125 | 193 | 140 | 165 |
| **Elongation @break [%]** | 275 | 270 | 540 | 150 | 220 | 166 | 270 | 158 | 214 |
| **Caliper [mm]** | 1,2 | 2,0 | 0,6 | 0,6 | 0,9 | 1,1 | 1,8 | 0,92 | 1,7 |
| **Basic Weight [gsm]** | 89 | 85 | 117 | 73 | 77 | 76 | 77 | 77 | 80 |
| **Tensile Strength (C) Permanent** | 40 | 41 | 35 | 51 | 47 | 47 | 49 | 46 | 49 |
| **Set (CD) [%]** | - | 21 | 11 | - | 26 | - | 23 | - | 25 |

## Claims

1. Elastic laminate having at least one top layer made of a nonwoven and an elastic film, the at least one top layer having, in an unstretched state in the cross direction, a plurality of folds running in the machine direction, and the at least one top layer and the elastic film being joined to one another at a plurality of spaced-apart bonding points,
**characterized in that**
in an unstretched state along the cross-direction, at least two of the folds between the bonding points have a different cross-section.

2. Elastic laminate according to claim 1, **characterized in that** the cross-sectional area of the at least two folds differs from each other by at least 25%.

3. Elastic laminate according to claim 1 or 2, **characterized in that** the at least two folds have a different height, which preferably differs from one another by at least 25%.

4. Elastic laminate having at least one top layer made of a nonwoven and an elastic film, the at least one top layer having, in an unstretched state in the cross direction, a plurality of folds running in the machine direction, and the at least one top layer and the elastic film being joined to one another at a plurality of spaced-apart bonding points or according to one of the preceding claims, **characterized in that** in a stretched state, in which the at least onetop layer is essentially free of folds in the stretching direction, the surface weight at the bonding points is greater than the surface weight between the bonding points.

5. Elastic laminate having at least one top layer made of a nonwoven and an elastic film, the at least one top layer having, in an unstretched state in the cross direction, a plurality of folds running in the machine direction, and the at least one top layer and the elastic film being joined to one another at a plurality of spaced-apart bonding points or according to one of the preceding claims, **characterized in that** in a stretched state, in which the at least onetop layer is essentially free of folds in the stretching direction, the surface weight of the at least one top layer at the bonding points is greater than the surface weight between the bonding points.

6. Elastic laminate according to claim 4 or 5, **characterized in that** the surface weightat the bonding points in the stretched state is at least 10% greater than the surface weight between the bonding points.

7. Elastic laminate according to one of the preceding claims, **characterized in that** the bonding points include a multiplicity of folds.

8. Elastic laminate according to one of the preceding claims, **characterized in that** the strain at a load of 1000 g according to DIN ISO 527 in the transverse direction is at least 100%.

9. Elastic laminate according to one of the preceding claims, **characterized in that** the permanent set after an initial transverse strain of 150% is at most 30%.

10. Elastic laminate according to one of the preceding claims, **characterized in that** the transverse tensile strength according to DIN ISO 527 is at least 25 N.

11. Elastic laminate according to one of the preceding claims, **characterized in that** the breaking elongation according to DIN ISO 527 in the transverse direction is at least 200%.

12. Elastic laminate according to one of the preceding claims, **characterized in that** the elastic film is arranged between at least two nonwoven top layers.

13. Elastic laminate according to claim 12, **characterized in that** the nonwoven top layers are at least partially directly joined to one another at the bonding points.

14. Elastic laminate according to one of the preceding claims, **characterized in that** the bonding points are formed by ultrasonic welding.

15. Elastic laminate according to one of the preceding claims, **characterized in that** the bonding points are arranged in longitudinal rows running in the machine direction and in transverse rows running in the transverse direction.

16. Elastic laminate according to claim 15, **characterized in that** bonding points of a longitudinal row and/or a transverse row that directly adjoin one another have different sizes.

17. Elastic laminate according to claim 12 or 13, **characterized in that** the bonding points of two longitudinal rows that adjoin one another in the cross direction are offset from one another in the machine direction.

18. Elastic laminate according to one of the preceding claims, **characterized in that** the bonding points are round, rectangular and/or oval.

19. Elastic laminate according to one of the preceding claims, **characterized in that** the elastic film has an elastic film layer and at least a first non-elastic outer layer coextruded with the elastic film layer.

20. Elastic laminate according to claim 19, **characterized in that** a second non-elastic outer layer is coextruded with the elastic film layer, the elastic film layer being arranged between the first and the second outer layer.
